# EUROPÄISCHE PATENTANMELDUNG

(11) **EP 1 437 581 A2**
(43) Veröffentlichungstag der Anmeldung: **14.07.2004**
(21) Anmeldenummer: 03027624.0
(22) Anmeldetag: 02.12.2003
(51) Int. Cl.: G01G 19/414, G07G 1/00

(54) **Rückwirkungsfreie Geräteschnittstelle**

(30) Priorität: 10.01.2003 DE 10300609
(71) Anmelder: Wincor Nixdorf International GmbH, 33106 Paderborn (DE)
(72) Erfinder: Duellings, Peter, 14612 Falkensee (DE); Klar, Uwe, 12347 Berlin (DE); Mueller, Rolf, 14482 Potsdam (DE); Oelkers, Hans-Joachim, 12107 Berlin (DE)

(57) **Zusammenfassung**

Zur Sicherung der Verbindung eines Anwendungsprogramms mit einem externen Gerät wird durch einen von anderen Anwendungsprogrammen nicht manipulierbaren Monitor statistische Information über die übertragenen Daten gebildet. Das Anwendungsprogramm bildet die statistische Information nach und veranlasst regelmässig eine Überprüfung gegenüber den vom Monitor gebildeten Werten.

## Beschreibung

Die Erfindung betrifft den Anschluss von geeichten Geräten, insbesondere den Anschluss von Waagen an Kassensysteme.

Kassen und andere Abrechnungssysteme werden bei höheren Anforderungen an die Funktionalität fast nur noch auf der Basis von handelsüblichen Arbeitsplatzrechnern mit entsprechenden Betriebssystemen aufgebaut.

Ein Problem ist dabei, dass bei solchen Systemen Manipulationen verhindert werden müssen. Wird beispielsweise eine Waage über eine serielle Schnittstelle angeschlossen, so ist sicherzustellen, dass das angezeigte Gewicht oder der errechnete Preis nicht verfälscht werden. Eine - relativ aufwendige - Lösung ist in der Patentschrift DE 44 08 549 C2 beschrieben.

In dem Maße, wie auf diesen Systemen handelsübliche Betriebssysteme eingesetzt werden, ist insbesondere die Möglichkeit gegeben, dass ein eingeschleustes Programm neben dem normalen, geprüften Anwendungsprogramm auf die serielle Schnittstelle zu der Waage zugreift und die Wäge- oder Anzeigedaten verfälscht.

Die Erfindung stellt sich die Aufgabe, eine solche Manipulation mit einfachen Mitteln zu erkennen.

Die Lösung nach der Erfindung erfolgt folgendermaßen: Zur Sicherung der Verbindung eines Anwendungsprogramms mit einem externen Gerät wird durch einen, von anderen Anwendungsprogrammen nicht manipulierbaren Monitor statistische Information über die übertragenen Daten gebildet. Das Anwendungsprogramm bildet die statistische Information nach und veranlasst regelmässig eine Überprüfung gegenüber den vom Monitor gebildeten Werten.

Eine erste Variante der Erfindung verwendet einen Monitor im Betriebssystem, der einen Zähler für die Anzahl der ein- und ausgegebenen Bytes führt. In einem LINUX-System ist hierfür ein entsprechend angepasster Gerätetreiber vorgesehen, der diese Zähler über einen Betriebssystemaufruf 'ioctl' mit dem Funktionscode TIOCSERGSTATS zugreifbar macht. Informationen über einen solchen Gerätetreibers sind in den Quellen des Monitors für serielle Schnittstellen, 'serialmon', beispielsweise unter
http://www.roestock.demon.co.uk/serialmon/
zu finden.

In diesem Fall führt das Anwendungsprogramm die Anzahl der gelesenen und geschriebenen Zeichen mit und führt jeweils nach dem Abschluss einer Transaktion einen Vergleich der mitgeführten Zähler mit denen durch den Betriebssstemaufruf ioctl/TIOCSERGSTATS ermittelten durch. Ist die Anzahl der von System gemeldeten Zeichen grösser, so liegt ein Fehler vor, bei dem ein anderes Anwendungsprogramm die Schnittstelle benutzt hat. Die jeweiligen Reaktionen in diesem Fehlerzustand sind je nach Anwendung und Umgebung zu bestimmen und können aus einem einfachen Abbruch der Anwendung, einem Offline-Setzen des externen Geräts oder ein Systemneustart sein.

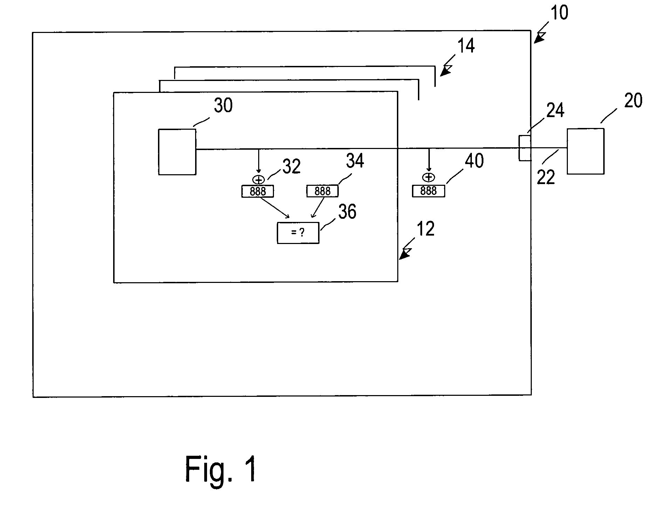

Eine entsprechende Anordnung ist in Fig. 1 skizziert:
An einen Rechner 10 ist ein externes Gerät 20 über eine Schnittstelle 24 und eine Verbindung 22 angeschlossen.
In dem Rechner ist ein Anwendungsprogramm 12 aktiv. Andere Anwendungsprogramme 14, die die Ausgaben verfälschen könnten, sind durch die Staffelung angedeutet.

In dem Anwendungsprogramm 12 ist die innere Anwendung 30 bisheriger Art enthalten, die Daten über die Verbindung 22 an das externe Gerät sendet und empfängt. Im Betriebssystem ist ein statistischer Zähler 40 vorhanden, der durch einen Betriebssystemaufruf wie 'ioctl' in ein Programminternes Vergleichsfeld 34 übertragen werden kann. Das Anwendungsprogramm führt analog zu dem vom Betriebssystem geführten Zähler 40 einen eigenen Zähler 32.

Entweder vor oder nach jeder Operation oder an sonstigen, durch das Anwendungsprogramm bestimmten Zeitpunkten, wird das Vergleichsfeld 34 geladen und mit dem eigenen Zähler 32 verglichen. Hat das Vergleichsfeld 34 eine grösseren Wert als der eigene Zähler, so liegt ein Fehler vor.

Alternativ wird der Vergleich in dem Gerätetreiber durchgeführt, so dass ein weiterer Systemaufruf notwendig ist, der die Sollwerte übermittelt und den Vergleich durchführt. Diese Variante ist zwar aufwendiger, hat aber den Vorteil, dass der Gerätetreiber berücksichtigen kann, dass die Puffer alle entleert sind und dann immer auf Gleichheit vergleichen kann. Der Fehlerfall besteht dann beispielsweise in einer vollständigen Sperrung des Geräts bis zum Rücksetzen durch den Systemverwalter oder Neustart des Systems.

Alternativ oder zusätzlich zur Zählung der Anzahl der übertragenen Zeichen kann auch eine Prüfsumme, beispielsweise ein CRC, gebildet und verglichen werden. Dies stellt einen Schutz gegen Fälle dar, in dem es dem anderen Anwendungsprogramm gelingt, seine Daten zu substituieren.

Anstatt die statistischen Daten im Betriebssystem zu bilden, ist es auch denkbar, die statistischen Zähler im externen Gerät zu bilden. Da in der Regel ohnehin Kommandos mit Parametern übermittelt werden, kann eines dieser Kommandos darin bestehen, die Sollwerte zu übermitteln und einen Vergleich zu veranlassen. Alternativ kann diese Funktion auch von einem eigenen Gerät wahrgenommen werden, das zwischen Rechner und externem Gerät eingeschleift ist; vorzugsweise wird es am externen Gerät aufgesteckt.

Eine Kombination mehrerer dieser Monitore ist gleichfalls möglich.

## Patentansprüche

1. Einrichtung in einem Datenverarbeitungssystem zum Schutz einer Anwendung, die ein externes Gerät über eine Schnittstelle benutzt, gegen Manipulation des externen Geräts durch andere Anwendungen, wobei ein Monitor von Anwendungsprogrammen nicht manipulierbare statistische Information bildet, dadurch gekennzeichenet, dass
- die Anwendung die statistische Information nachbildet,
- vom Anwendungsprogramm initiert, ein Vergleich der nachgebildeten mit der vom Monitor gebildeten statistischen Information erfolgt, und
- bei negativem Vergleich ein Fehlerzustand angenommen wird.

2. Einrichtung nach Anspruch 1, wobei der Vergleich vom Monitor durchgeführt wird und der Fehlerzustand umfasst, dass die weitere Informationsübertragung bis zum Rücksetzen des Datenverarbeitungssystems gesperrt wird.

3. Einrichtung nach Anspruch 1, wobei der Vergleich im Anwendungsprogramm durch Auslesen der statistischen Information erfolgt.

4. Einrichtung nach einem der Ansprüche 1 bis 3, wobei der Monitor Teil des Betriebssystems ist.

5. Einrichtung nach einem der Ansprüche 1 bis 3, wobei der Monitor ein in die Verbindung zum externen Gerät eingefügtes Gerät ist.

6. Einrichtung nach einem der Ansprüche 1 bis 3, wobei der Monitor Teil des externen Geräts ist.

7. Einrichtung nach einem der Ansprüche 1 bis 6, wobei die statistische Information eine Prüfsumme über die gelesenen bzw. geschriebenen Zeichen ist.

8. Einrichtung nach einem der Ansprüche 1 bis 6, wobei die statistische Information ein Zähler über die gelesenen bzw. geschriebenen Zeichen ist.
